# EUROPÄISCHE PATENTSCHRIFT

(11) **EP 1 181 169 B1**
(45) Veröffentlichungstag und Bekanntmachung des Hinweises auf die Patenterteilung: **07.06.2006**
(21) Anmeldenummer: 01913878.3
(22) Anmeldetag: 14.03.2001
(51) Int. Cl.: B60N 3/10

(54) **HALTER FÜR EINEN GETRÄNKEBEHÄLTER**
HOLDER FOR A DRINKS CONTAINER
SUPPORT POUR CONTENANT DE BOISSON

(30) Priorität: 01.04.2000 DE 10016463
(43) Veröffentlichungstag der Anmeldung: 27.02.2002
(73) Patentinhaber: fischerwerke Artur Fischer GmbH & Co. KG, 72178 Waldachtal (DE)
(72) Erfinder: SCHAAL, Falk, 72275 Alpirsbach (DE); BENZ, Wolf-Dieter, 72296 Schopfloch (DE); HEHR, Christian, 72213 Altensteig (DE)
(86) Internationale Anmeldenummer: PCT/EP2001/002847
(87) Internationale Veröffentlichungsnummer: WO 2001/074621

(56) Entgegenhaltungen:
- PATENT ABSTRACTS OF JAPAN vol. 018, no. 521 (M-1681), 30. September 1994 (1994-09-30) & JP 06 179338 A (MAZDA MOTOR CORP), 28. Juni 1994 (1994-06-28)
- PATENT ABSTRACTS OF JAPAN vol. 1997, no. 03, 31. März 1997 (1997-03-31) & JP 08 300997 A (SUZUKI MOTOR CORP), 19. November 1996 (1996-11-19)
- PATENT ABSTRACTS OF JAPAN vol. 018, no. 319 (M-1623), 17. Juni 1994 (1994-06-17) & JP 06 072228 A (NISSAN MOTOR CO LTD), 15. März 1994 (1994-03-15)
- PATENT ABSTRACTS OF JAPAN vol. 018, no. 319 (M-1623), 17. Juni 1994 (1994-06-17) & JP 06 072227 A (NISSAN MOTOR CO LTD), 15. März 1994 (1994-03-15)
- PATENT ABSTRACTS OF JAPAN vol. 018, no. 319 (M-1623), 17. Juni 1994 (1994-06-17) & JP 06 072225 A (NISSAN MOTOR CO LTD), 15. März 1994 (1994-03-15)

## Beschreibung

Die Erfindung betrifft einen Halter für einen Getränkebehälter, wie beispielsweise eine Dose, einen Becher oder eine Tasse, mit den Merkmalen des Oberbegriffs des Anspruchs 1.

Derartige Halter zum Einbau in Kraftfahrzeuge sind in einer nahezu unüberschaubaren Vielzahl an Ausführungsformen an sich bekannt. Die bekannten Halter weisen ein Halteteil mit einer Einstellöffnung zum Einstellen des Getränkebehälters und ein mit Abstand darunter angeordnetes, beispielsweise flächen- oder auch stabförmiges Stützteil auf, auf dem der in die Einstellöffnung eingestellte Getränkebehälter steht. Es ist bekannt, die Halter mit einer Führung in eine Gebrauchsstellung ausfahr-, ausschwenk- oder ausziehbar auszubilden. Wird der Halter nicht gebraucht, lässt er sich in eine beispielsweise in einer Türverkleidung oder einem Armaturenbrett des Kraftwagens versenkte Stellung verbringen. Die Führung kann beispielsweise als Schiebeführung, mit der der Halter schubladenartig ausziehbar geführt ist, oder als Schwenklagerung, mit der der Halter aus der Türverkleidung, dem Armaturenbrett oder dgl. herausschwenkbar ist, ausgebildet sein.

Neben reinen Haltern sind weiterhin Halter bekannt, die baulich mit einem Behältnis, beispielsweise einem Aschenbecher, kombiniert sind. So ist beispielsweise aus der Druckschrift JP-A-08-300 997 ein ausziehbarer Getränkehalter mit Halteteil und Stützteil bekannt, unter welchem ebenfalls schubladenartig ein Aschenbecher ausziehbar ist. Eine ähnliche Anordnung ist aus der Druckschrift JP-A-06-072 228 bekannt. Beiden Druckschriften ist jedoch gemeinsam, dass die Haltehöhe des Halters für den Getränkebehälter im Verhältnis zu dem benötigten Bauraum für die Kombination aus Halter und Behältnis relativ klein ist. Grund hierfür ist, dass zwar eine mechanische Kopplung zwischen Halter und Behältnis gegeben ist, diese jedoch räumlich getrennt voneinander angeordnet sind.

Ausgehend vom einem Halter der vorstehend erläuterten Art liegt der Erfindung die Aufgabe zugrunde, einen für den Halter benötigten Einbauraum gut auszunutzen.

Diese Aufgabe wird erfindungsgemäß durch die Merkmale des Anspruchs 1 gelöst. Der erfindungsgemäße Halter weist ein Behältnis, beispielsweise ein Ablagefach oder einen Aschenbecher auf, das in den Halter integriert ist. Unter integriert im Sinne der Erfindung ist zu verstehen, dass sich in der Grundstellung des Behältnisses, des Halteteils und des Stützteils das Behältnis im gleichen Einbauraum angeordnet ist, in dem sich auch das Halteteil und das Stützteil befinden. Es befindet sich also das Behältnis zwischen dem Halteteil und dem Stützteil oder umgekehrt befinden sich das Halteteil und das Stützteil in dem Behältnis. Es wird dadurch derselbe Einbauraum für die Unterbringung sowohl des Behältnisses als auch des Halteteils und des Stützteils genutzt. Ein für den erfindungsgemäßen Halter erforderlicher Einbauraum ist daher nicht oder nur geringfügig größer als ein für das Halteteil und das Stützteil ohne das Behältnis erforderlicher Einbauraum. Die Erfindung hat somit den Vorteil, dass der ansonsten ungenutzte Einbauraum für das Halteteil und das Stützteil zusätzlich für die Unterbringung des Behältnisses genutzt wird. Dabei ist der erfindungsgemäße Halter vorzugsweise so ausgebildet, dass ein in das Behältnis eingelegter Inhalt das Einstellen eines Getränkebehälters in die Einstellöffnung des Halteteils und auf das Stützteil nicht be- oder verhindert. Bei einer Ausgestaltung der Erfindung ist das Behältnis in einer Höhe zwischen dem die Einstellöffnung für den Getränkebehälter aufweisenden Halteteil und dem Stützteil für den Getränkbehälter angeordnet.

Weitere Ausführungsformen der Erfindung sind in den abhängigen Ansprüchen angegeben.

Das Halteteil und das Stützteil des erfindungsgemäßen Halters sind vorzugsweise miteinander verbunden, insbesondere sind sie einstückig miteinander ausgeführt, so dass sie stets gemeinsam bewegt werden. Grundsätzlich ist eine gemeinsame Führung für das Halteteil und das Stützteil ausreichend.

Die Erfindung wird nachfolgend anhand zweier in der Zeichnung dargestellter Ausführungsbeispiele näher erläutert. Es zeigen:
- Figuren 1 - 3: eine erste Ausführungsform eines erfindungsgemäßen Halters in drei unterschiedlichen Stellungen;
- Figuren 4 und 5: eine schematisierte und vereinfachte Draufsicht auf den Halter aus Figuren 1-3, wobei die in Figur 4 dargestellte Stellung derjenigen aus Figur 2 und die in Figur 5 dargestellte Stellung derjenigen aus Figur 3 entspricht;
- Figuren 6-8: eine zweite Ausführungsform eines erfindungsgemäßen Halters in drei unterschiedlichen Stellungen;
- Figuren 9 und 10: den Halter aus Figuren 6 - 8 in schematisierter und vereinfachter Draufsicht, wobei die in Figur 9 dargestellte Stellung derjenigen aus Figur 7 und die in Figur 10 dargestellte Stellung derjenigen aus Figur 8 entspricht;
- Figuren 11 und 12: eine dritte Ausführungsform eines erfindungsgemäßen Halters in zwei unterschiedlichen Stellungen; und
- Figuren 13-15: den Halter aus Figuren 11 und 12 in schematisierter und vereinfachter Schnittdarstellung, wobei die in Figur 14 dargestellte Stellung derjenigen aus Figur 11 und die in Figur 15 dargestellte Stellung derjenigen aus Figur 12 entspricht und Figur 13 eine weitere Stellung des Halters zeigt.

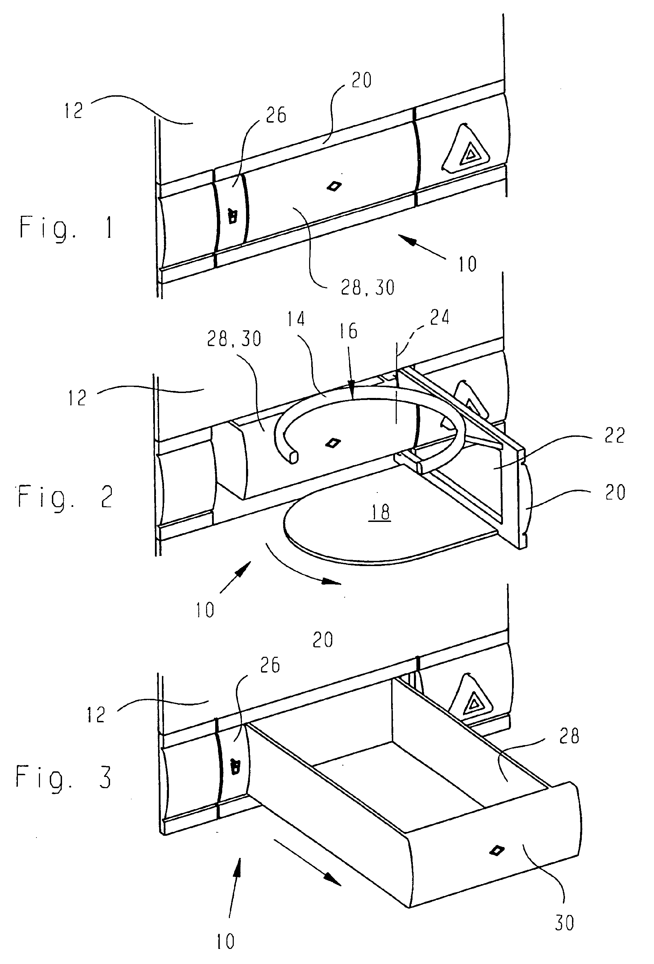

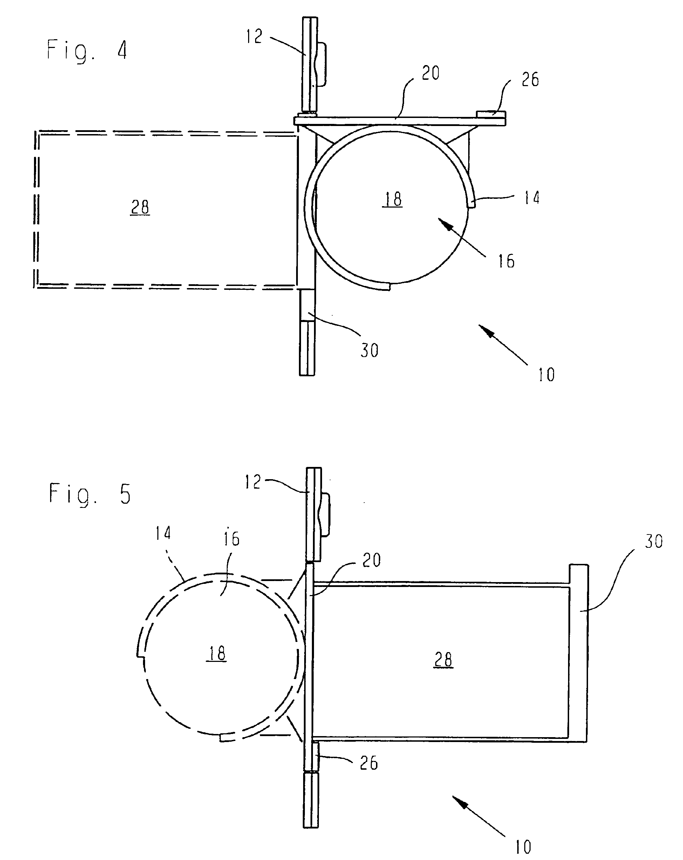

Der in Figuren 1 - 5 dargestellte, erfindungsgemäße Halter 10 ist beispielsweise in ein Armaturenbrett 12 eines im Übrigen nicht dargestellten Kraftwagens eingebaut. Der Halter 10 ist zum Einstellen und Halten eines nicht dargestellten Getränkebehälters wie beispielsweise einer Dose, einem Becher oder einer Tasse vorgesehen. In einer in Figur 1 dargestellten Grundstellung ist der Halter 10 versenkt im Armaturenbrett 12 untergebracht, er schließt bündig mit einer Oberfläche des Armaturenbrettes 12 ab. In Figuren 2 und 4 ist der Halter 10 in eine Gebrauchsstellung bewegt worden, in der er sich vor dem Armaturenbrett 12 befindet und zum Einstellen und Halten eines Getränkebehälters nutzbar ist. Wie in Figuren 2 und 4 sichtbar weist der Halter 10 als Halteteil einen Haltering 14 auf, der als Teilkreisring ausgebildet ist und sich über 3/4 eines Vollkreises erstreckt. Der Haltering 14 umschließt eine Einstellöffnung 16 zum Einstellen des nicht dargestellten Getränkebehälters. '

Mit Abstand unterhalb des Halterings 14 weist der Halter 10 eine Stützplatte 18 auf, die ein Stützteil 18 des Halters 10 bildet. Über eine vertikale Blende 20 sind der Haltering 14 und die Stützplatte 18 einstückig miteinander verbunden. Die Blende 20 ist als rechteckförmiger Rahmen mit einer rechteckigen Ausnehmung 22 ausgebildet.

Der Halter 10 weist als Führung eine in der Zeichnung nicht sichtbare Schwenklagerung mit Schwenkzapfen auf, die auf einer Seite der Blende 20 nach oben und unten abstehen und die in Lagerlöchern des Armaturenbretts 12 einliegen. Durch die Schwenklagerung ist der Halter 10 um eine vertikale Schwenkachse 24 schwenkbar im Armaturenbrett 12 geführt. Der Halter 10 schwenkt vorzugsweise federbetätigt in die in Figuren 2 und 4 dargestellte Gebrauchsstellung aus und wird in der in Figur 1 dargestellten, im Armaturenbrett 12 versenkten Stellung durch eine an sich bekannte Verriegelungseinrichtung, beispielsweise eine sog. Push-Push-Mechanik, gehalten. Durch leichten Druck auf eine Taste 26 (Figur 1) auf einer der Schwenkachse 24 abgewandten Seite der Blende 20 lässt sich die Verriegelungseinrichtung entriegeln, so dass der Halter 10 in die in Figuren 2 und 4 dargestellte Gebrauchsstellung aus dem Armaturenbrett 12 herausschwenkt.

In den erfindungsgemäßen Halter 10 ist ein Behältnis, im dargestellten Ausführungsbeispiel ein Ablagefach 28 integriert. Das Ablagefach 28 weist in der Draufsicht eine längliche Rechteckform auf. An einer vorderen Stirnseite weist das Ablagefach 28 eine vertikale Blende 30 von der Größe der Ausnehmung 22 der Blende 20 des Halters 10 auf. In einer versenkten Grundstellung des Ablagefachs 28 und des Halters 10 liegen die Blende 30 des Ablagefachs 28 und die Blende 20 des Halters 10 bündig ineinander, sie sind bündig mit dem Armaturenbrett 12 (Figur 1). Das Ablagefach 28 ist in einer Höhe zwischen dem Haltering 14 und der Stützplatte 18 des Halters 10 angeordnet. Das Ablagefach 28 weist eine in der Zeichnung nicht sichtbare Schiebeführung auf, es ist wie in Figuren 3 und 5 dargestellt, schubladenartig auszieh- oder ausfahrbar. Das Ausfahren des Ablagefachs 28 erfolgt vorzugsweise federbetätigt, in der im Armaturenbrett 12 versenkten Grundstellung wird das Ablagefach 28 mittels einer nicht dargestellten Verriegelungseinrichtung, beispielsweise einer an sich bekannten Push-Push-Mechanik gehalten, die durch leichten Druck auf die Blende 30 des Ablagefachs 28 entriegelbar ist. Der Halter 10 und das Ablagefach 28 sind wahlweise in ihre jeweilige Gebrauchsstellung verbringbar und nutzbar, wie in Figuren 2 - 5 zu sehen.

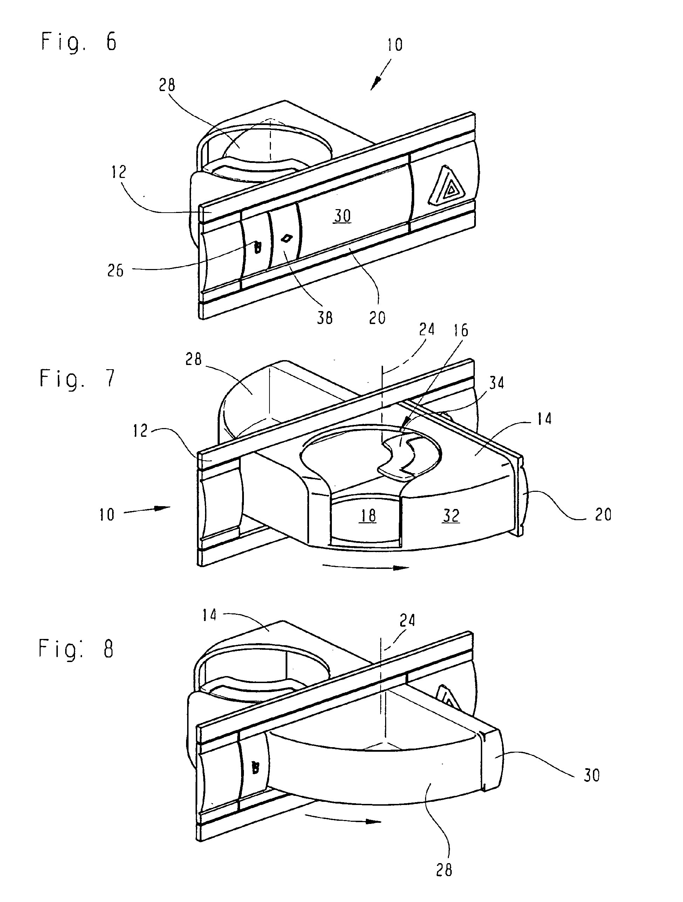

Bei der Erläuterung der in Figuren 6 - 10 dargestellten Ausführungsform eines erfindungsgemäßen Halters 10 werden nachfolgend für mit Figuren 1 - 5 gleiche Bauteile übereinstimmende Bezugszahlen verwendet. Der Halter 10 aus Figuren 6 - 10 weist ein Ablagefach 28 auf, das im Halter 10 einliegt. Der Halter 10 und das in ihm einliegende Ablagefach 28 weisen in der Draufsicht näherungsweise die Form eines Viertelkreisausschnitts auf. Der Halter 10 ist als eine Art in Draufsicht viertelkreisförmiges Gehäuse ausgebildet, dessen Oberseite ein Halteteil 14 und dessen Boden ein Stützteil 18 des Halters 10 bilden. Die Oberseite 14 und der Boden 18 des Halters 10 sind durch eine Seitenwand 32 und eine Frontblende 20 einstückig wie bereits erwähnt zu einer Art Gehäuse miteinander verbunden. Die das Halteteil 14 des Halters 10 bildende Oberseite weist eine Ausnehmung auf, die sich an einer Stelle bis in die Seitenwand 32 hinein erstreckt. Die Ausnehmung bildet eine Einstellöffnung 16 zum Einstellen eines nicht dargestellten Getränkebehälters. An einer Stelle der Einstellöffnung 16 ist eine an sich bekannte, federbeaufschlagte Ausgleichsklappe 34 angeordnet, die federbetätigt in die Einstellöffnung 16 hinein verschwenkt und gegen einen eingestellten Getränkebehälter drückt. Die Ausgleichsklappe 34 dient der Anpassung des Halters 10 an Getränkebehälter unterschiedlichen Durchmessers.

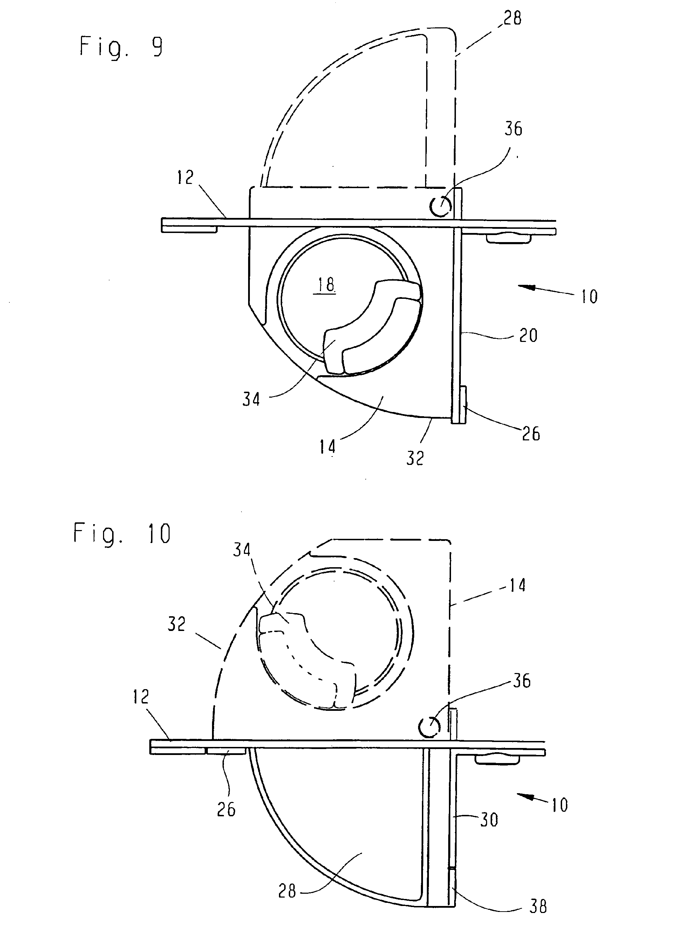

Der Halter 10 weist als Führung eine Schwenklagerung 36 mit Schwenkzapfen des Halters 10, die in Lagerlöchern im Armaturenbrett 12 einliegen, auf, mit der der Halter 10 um 90° aus der in Figur 6 dargestellten, im Armaturenbrett 12 versenkten Stellung in die in Figuren 7 und 9 dargestellte, aus dem Armaturenbrett 12 vorstehende Gebrauchsstellung schwenkbar ist. In der Gebrauchsstellung befindet sich der Halter 10 vor dem Armaturenbrett 12, so dass ein nicht dargestellter Getränkebehälter in die Einstellöffnung 16 des Halters 10 einstellbar ist. Vorzugsweise schwenkt der Halter 10 federbetätigt beispielsweise mittels eines nicht sichtbaren Torsionsfederelements in die Gebrauchsstellung. In der Grundstellung wird der Halter 10 durch eine nicht sichtbare Verriegelungseinrichtung, beispielsweise eine an sich bekannte Push-Push-Mechanik gehalten, die durch leichten Druck auf eine Entriegelungstaste 26 des Halters 10 entriegelbar ist.

Die Blende 20 des Halters 10 hat die Form eines rechteckförmigen Rahmens mit einer rechteckförmigen Ausnehmung, in der eine Blende 30 des Ablagefachs 28 bündig einliegt, wenn sich der Halter 10 und das Ablagefach 28 wie in Figur 6 dargestellt in der im Armaturenbrett 12 versenkten Grundstellung befinden. Das Ablagefach 28 weist ebenfalls eine in der Zeichnung nicht sichtbare Schwenklagerung als Führung auf, deren Schwenkachse 24 mit der Schwenkachse 24 des Halters 10 zusammenfällt. Das Ablagefach 28 ist um dieselbe Schwenkachse 24 wie der Halter 10 um 90° aus der im Armaturenbrett 12 versenkten Grundstellung in eine aus dem Armaturenbrett 12 vorstehende Gebrauchsstellung schwenkbar, die in Figuren 8 und 10 dargestellt ist. Das Herausschwenken erfolgt vorzugsweise federbetätigt, in der versenkten Grundstellung ist das Ablagefach 28 mittels einer Verriegelungseinrichtung, beispielsweise einer an sich bekannten Push-Push-Mechanik gehalten, die durch kurzen Druck auf eine Taste 38 entriegelbar ist. Auch bei dem in Figuren 6 - 10 dargestellten, erfindungsgemäßen Halter 10 sind wahlweise der Halter 10 oder das Ablagefach 28 in die Gebrauchsstellung aus dem Armaturenbrett 12 herausschwenkbar und nutzbar.

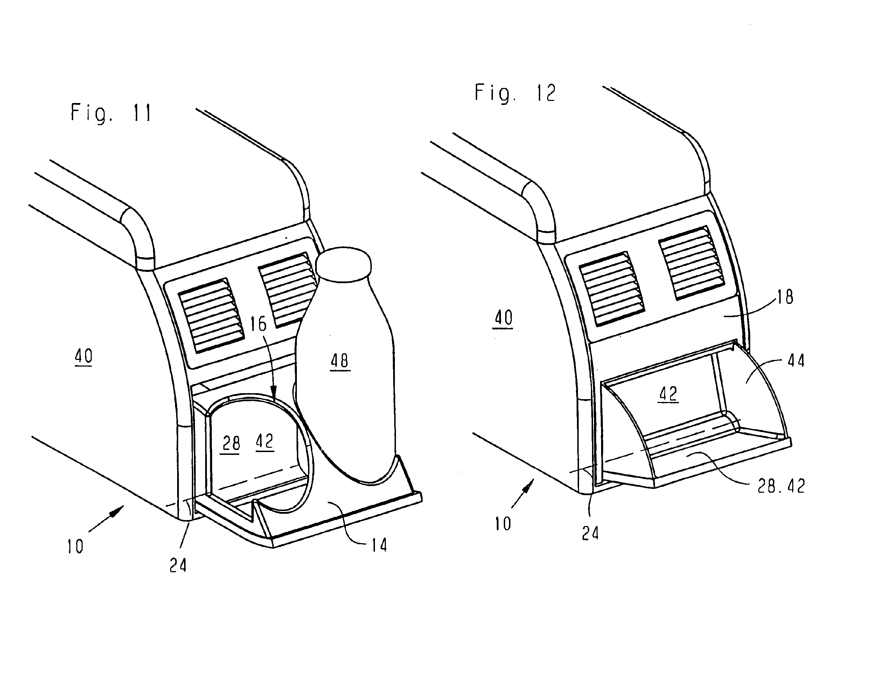

Auch bei der Erläuterung des in Figuren 11-15 gezeigten Ausführungsbeispiels eines erfindungsgemäßen Halters 10 werden für mit Figuren 1-5 bzw. Figuren 6-10 gleiche Bauteile übereinstimmende Bezugszahlen verwendet. Der Halter 10 aus Figuren 11-15 ist in ein hinteres, Fondspassagieren zugängliches Ende einer Mittelkonsole 40 eines im übrigen nicht dargestellten Kraftwagens eingebaut. Der Halter 10 weist ein Ablagefach 28 auf, welches eine Behältnis des Halters 10 bildet. Das Ablagefach 28 weist zwei zueinander rechtwinklig angeordnete Wände 42 auf, die unter Bildung einer gemeinsamen Kante oder Kehle aneinander stoßen. An Stirnenden sind die Wände 42 durch viertelkreisscheibenförmige Stirnwände 44 miteinander verbunden.

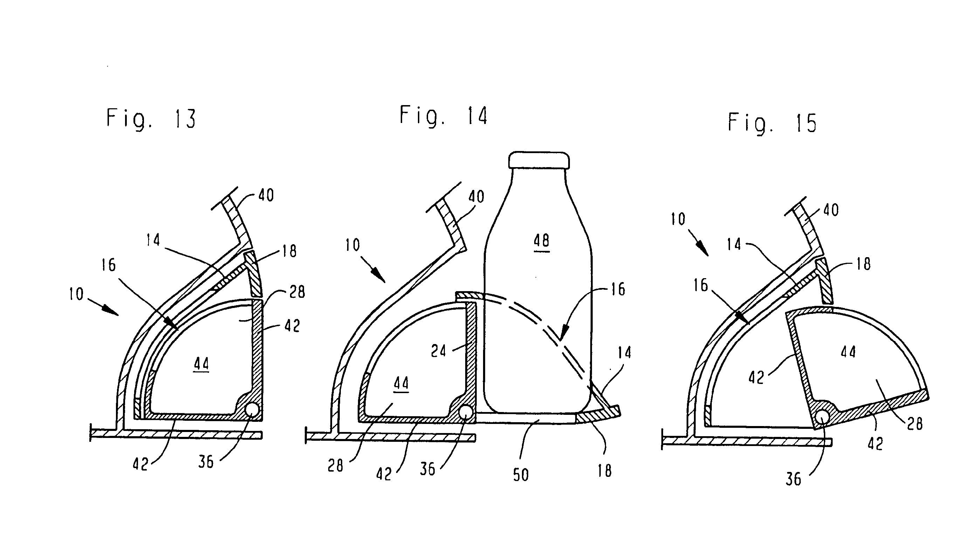

Das Ablagefach 28 ist um eine horizontale Schwenkachse 24 schwenkbar, die entlang der gemeinsamen Kante der beiden Wände 42 des Ablagefachs 28 verläuft. Zur Schwenklagerung weist das Ablagefach 28 ein Zapfenlager 36 (Figuren 13-15) mit seitlich angeordneten Zapfen auf, die die Schwenkachse 24 definieren. Das Ablagefach 28 lässt sich aus einer in Figuren 11, 13, 14 dargestellten Grundstellung um etwas weniger als 90° in eine in Figuren 12 und 15 dargestellte Gebrauchsstellung schwenken. In der Grundstellung ist das Ablagefach 28 in der Mittelkonsole 40 versenkt und schließt mit einer Wand 42 bündig mit der Mittelkonsole 40 ab. In der Gebrauchsstellung steht das Ablagefach 28 aus dem hinteren Ende der Mittelkonsole 40 vor und ist zum Entnehmen oder Einlegen von Gegenständen offen.

Das Ablagefach 28 liegt in einem Halteteil 14 und einem mit diesem einstückigen Stützteil 18 ein. Das Halteteil 14 und das Stützteil 18 bilden gemeinsam einen Körper, der in Seitenansicht näherungsweise die Form eines Viertelkreissegments aufweist und in dem das Ablagefach 28 einliegt. Das Halteteil 14 und das Stützteil 18 sind mit dem Zapfenlager 36 um die Schwenkachse 24 um etwa 90° schwenkbar. Das Zapfenlager 36 und die Schwenkachse 24 sind für das Ablagefach 28 und das Halteteil 14 mit dem Stützteil 18 gemeinsam. In einer in Figuren 12, 13 und 15 dargestellten Grundstellung ist das Halteteil 14 in der Mittelkonsole 40 versenkt und schließt mit dem Stützteil 18 bündig mit dem hinteren Ende der Mittelkonsole 40 ab. Befindet sich auch das Ablagefach 28 in der Grundstellung, ist das Stützteil 18 auch mit der einen Wand 42 des Ablagefachs 28 bündig (Figur 13). In der in Figuren 11 und 14 dargestellten Gebrauchsstellung steht das Halteteil 14 und das Stützteil 18 aus dem hinteren Ende der Mittelkonsole 40 vor, in der Gebrauchsstellung nimmt das Stützteil 18 eine in etwa horizontale Lage ein.

Das Halteteil 14 ist mit zwei nebeneinander angeordneten, kreisförmigen Ausnehmungen versehen, die Einstellöffnungen 16 zum Einstellen von Getränkebehältern wie bspw. der in Figuren 11 und 14 dargestellten Flasche 48 bilden. Der Getränkebehälter steht auf dem Stützteil 18 auf.

Das Stützteil 18 weist eine rechteckförmige Aussparung 50 auf, deren Form und Größe der einen Wand 42 des Ablagefachs 28 entspricht. Befinden sich das Ablagefach 28 und das Halteteil 14 mit dem Stützteil 18 in der in der Mittelkonsole 40 versenkten Grundstellung, liegt die Wand 42 des Ablagefachs 28 bündig mit dem Stützteil 18 in dessen Aussparung 50 ein. Das Ablagefach 28 und das Halteteil 14 mit dem Stützteil 18 lassen sich unabhängig voneinander in die Gebrauchstellung und die Grundstellung schwenken. Im Ablagefach 28 einliegende Gegenstände behindern nicht das Einstellen eines Getränkebehälters in die Einstellöffnungen 16 des Halteteils 14, wenn sich das Ablagefach 28 in der Grundstellung befindet, wie in Figuren 11 und 14 dargestellt.

## Patentansprüche

1. Halter für einen Getränkebehälter, mit einem eine Einstellöffnung (16) zum Einstellen des Getränkebehälters aufweisenden Halteteil (14) und mit einem mit Abstand unterhalb des Halteteils (14) angeordneten Stützteil (18), auf das der Getränkebehälter stellbar ist, wobei das Halteteil (14) und das Stützteil (18) eine Führung aufweisen, mit der sie aus einer versenkten Grundstellung in eine ausgefahrene Gebrauchsstellung bewegbar geführt sind, und wobei der Halter (10) ein Behältnis (28) aufweist, das eine Führung aufweist, mit der das Behältnis (28) unabhängig vom Halteteil (14) und vom Stützteil (18) aus einer versenkten Grundstellung in eine ausgefahrene Gebrauchsstellung bewegbar geführt ist, **dadurch gekennzeichnet, dass** sich in der Grundstellung von Halteteil (14), Stützteil (18) und Behältnis (28) das Behältnis (28) zwischen dem Halteteil (14) und dem Stützteil (18) oder das Halteteil (14) und das Stützteil (18) im Behältnis (28) befindet.

2. Halter nach Anspruch 1, **dadurch gekennzeichnet, dass** das Behältnis (28) in einer Höhe zwischen dem Halterteil (14) und dem Stützteil (18) angeordnet ist.

3. Halter nach Anspruch 1, **dadurch gekennzeichnet, dass** das Halteteil (14) und das Stützteil (18) miteinander verbunden sind.

4. Halter nach Anspruch 3, **dadurch gekennzeichnet, dass** das Halteteil (14) einstückig mit dem Stützteil (18) ist.

5. Halter nach Anspruch 1, **dadurch gekennzeichnet, dass** das Halteteil (14) und das Stützteil (18) eine Schwenklagerung als Führung aufweisen.

6. Halter nach Anspruch 1, **dadurch gekennzeichnet, dass** das Behältnis (28) eine Schiebeführung aufweist.

7. Halter nach Anspruch 1, **dadurch gekennzeichnet, dass** das Behältnis (28) eine Schwenklagerung als Führung aufweist.

8. Halter nach Anspruch 1, **dadurch gekennzeichnet, dass** das Behältnis (28) ein Ablagefach oder ein Aschenbecher ist.

## Claims

1. Holder for a drinks container, having a holding part (14) provided with an insertion opening (16) for inserting the drinks container and having a supporting part (18) arranged below the holding part (14), spaced apart therefrom, onto which supporting part the drinks container is arranged to be placed, the holding part (14) and supporting part (18) having a guide means by which they are movably guided from a retracted, basic position into an extended, use position, and the holder (10) having a receptacle (28) which has a guide means by which the receptacle (28) is movably guided from a retracted, basic position into an extended, use position independently of the holding part (14) and supporting part (18), **characterised in that**, when the holding part (14), supporting part (18) and receptacle (28) are in the basic position, the receptacle (28) is located between the holding part (14) and supporting part (18) or the holding part (14) and supporting part (18) are located within the receptacle (28).

2. Holder according to claim 1, **characterised in that** the receptacle (28) is arranged at a level between the holder part (14) and the supporting part (18).

3. Holder according to claim 1, **characterised in that** the holding part (14) and the supporting part (18) are connected to one another.

4. Holder according to claim 3, **characterised in that** the holding part (14) is integral with the supporting part (18).

5. Holder according to claim 1, **characterised in that** the holding part (14) and the supporting part (18) have a pivotal mounting as the guide means.

6. Holder according to claim 1, **characterised in that** the receptacle (28) has a sliding guide means.

7. Holder according to claim 1, **characterised in that** the receptacle (28) has a pivotal mounting as the guide means.

8. Holder according to claim 1, **characterised in that** the receptacle (28) is a storage compartment or an ash-tray.

## Revendications

1. Support pour un contenant de boisson, avec une partie de support (14) présentant une ouverture d'insertion (16) destinée à y insérer le contenant de boisson et une partie d'appui (18) disposée à distance au-dessous de la partie de support (14), sur laquelle le contenant de boisson peut être posé, la partie de support (14) et la partie d'appui (18) présentant un guidage avec lequel elles sont guidées de manière mobile à partir d'une position de base encastrée pour aller dans une position d'utilisation sortie, et le support (10) présentant un récipient (28) qui présente un guidage avec lequel le récipient (28) est guidé de manière mobile indépendamment de la partie de support (14) et de la partie d'appui (18) à partir d'une position de base encastrée pour aller dans une position d'utilisation sortie, **caractérisé en ce que**, dans la position de base de la partie de support (14), de la partie d'appui (18) et du récipient (28), le récipient (28) se trouve entre la partie de support (14) et la partie d'appui (18) ou la partie de support (14) et la partie d'appui (18) se trouvent dans le récipient (28).

2. Support selon la revendication 1, **caractérisé en ce que** le récipient (28) est disposé à une hauteur entre la partie de support (14) et la partie d'appui (18).

3. Support selon la revendication 1, **caractérisé en ce que** la partie de support (14) et la partie d'appui (18) sont reliées entre elles.

4. Support selon la revendication 1, **caractérisé en ce que** la partie de support (14) est d'un seul tenant avec la partie d'appui (18).

5. Support selon la revendication 1, **caractérisé en ce que** la partie de support (14) et la partie d'appui (18) présentent un logement pivotant comme guidage.

6. Support selon la revendication 1, **caractérisé en ce que** le récipient (28) présente un guidage coulissant.

7. Support selon la revendication 1, **caractérisé en ce que** le récipient (28) présente un logement pivotant comme guidage.

8. Support selon la revendication 1, **caractérisé en ce que** le récipient (28) est un vide-poches ou un cendrier.
